# EUROPÄISCHE PATENTSCHRIFT

(11) **EP 3 617 041 B1**
(45) Veröffentlichungstag und Bekanntmachung des Hinweises auf die Patenterteilung: **05.10.2022**
(21) Anmeldenummer: 19192994.2
(22) Anmeldetag: 22.08.2019
(51) Int. Cl.: B62D 25/20, B62D 23/00, B62D 33/06, B62D 33/02, B60D 1/50, B62D 25/08

(54) **FAHRERHAUS FÜR EIN NUTZFAHRZEUG**
DRIVERS CAB FOR COMMERCIAL VEHICLE
CABINE DE CONDUCTEUR POUR UN VÉHICULE UTILITAIRE

(30) Priorität: 30.08.2018 DE 102018121210
(43) Veröffentlichungstag der Anmeldung: 04.03.2020
(73) Patentinhaber: MAN Truck & Bus SE, 80995 München (DE)
(72) Erfinder: Rohrmüller, Hans, 82216 Maisach (DE); Burger, Norbert, 84030 Ergolding (DE); Möller, Andreas, 36145 Hofbieber (DE)
(74) Vertreter: v. Bezold & Partner Patentanwälte - PartG mbB

(56) Entgegenhaltungen:
- EP-A1- 1 380 496
- DE-A1- 10 357 930
- DE-T2- 69 411 336
- DE-U1-202015 105 094
- US-A1- 2004 119 276
- US-A1- 2010 263 954

## Beschreibung

Die Erfindung betrifft ein Fahrerhaus für ein Nutzfahrzeug, vorzugsweise einen Lastkraftwagen.

Fahrerhäuser für Lastkraftwagen sind üblicherweise in einer Schalenbauweise aus Blechpressteilen ausgeführt, an die dann außen und innen Montagekomponenten angebracht werden. Durch diese Bauweise können unter wirtschaftlichen Gesichtspunkten insbesondere große Stückzahlen hergestellt werden, da für die Werkzeuge ein hoher Investitionsbedarf notwendig sein kann.

Herkömmliche Fahrerhäuser in Schalenbauweise aus Blechpressteilen sind bspw. aus der US 5,863,093 A, der US 6,260,914 B1 und der DE 195 13 089 A1 bekannt.

Die US 2004/119276 A1 betrifft ein Fahrgestell für ein vierrädriges Straßenfahrzeug mit einer ebenen Plattform, die aus einer Sandwichstruktur besteht, einem vorderen rohrförmigen Rahmen, einem hinteren rohrförmigen Rahmen und vier linearen Dämpfer, die starr und ortsfest an den Rahmen befestigt sind.

Die DE 103 57 930 A1 offenbart eine Fahrerhaus-Tragstruktur für ein Nutzfahrzeug, wobei eine Sicherheitszelle in einem Fahrerhaus mit einem Frontbereich und einer einem Ladebereich zugeordneten Rückseite angeordnet ist. Ein Sitzbereich ist von einer steifen, käfigartigen Sicherheitszelle umgeben, an die sich zwischen Sitzbereich und Ladebereich ein Verformungsbereich zur Aufnahme von Verformungsenergie anschließt.

Die US 2010/263954 A1 betrifft eine selbsttragende Monocoque-Karosserie mit einer Grundrahmenstruktur.

Die EP 1 380 496 A1 offenbart ein Fahrzeugcockpit umfassend ein Dach, eine Fußplatte, mindestens einen Sitz, eine Vorderseite, eine Rückwand, eine Sitzlehne und zwei mit Öffnungen versehene Seitenwände zur Aufnahme der Türen. Das Cockpit hat außerdem Öffnungen für die Anbringung einer Windschutzscheibe und für die Beleuchtungseinrichtungen. Das Cockpit ist aus einem einzigen Teil aus polymerem thermoplastischem Material hergestellt, das somit eine hohe Gleichmäßigkeit ohne strukturelle Schwächezone aufweist.

Der Erfindung liegt die Aufgabe zu Grunde, ein alternatives und/oder verbessertes Fahrerhaus für ein Nutzfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Fahrerhaus für ein Nutzfahrzeug, vorzugsweise einen Lastkraftwagen. Das Fahrerhaus weist eine Fahrerhaustragstruktur auf, die einen (z. B. selbstragenden) Fahrerhausrohbau (z. B. teilweise oder vollständig) bildet und als ein Gitterrahmen ausgeführt ist. Das Fahrerhaus weist einen frontseitigen Unterfahrschutz auf, der als eine Querträgerkonstruktion des Gitterrahmens in die Fahrerhaustragstruktur integriert ist.

Aufgrund des Investitionsbedarfes kann eine Schalenbauweise mit Blechpressteilen erst bei höheren Stückzahlen unter wirtschaftlichen Gesichtspunkten sinnvoll umsetzbar sein. Daher wird hierin vorgeschlagen, das Fahrerhaus mit einer Fahrerhaustragstruktur aus einem Gitterrahmen vorzusehen. So kann ein Fahrerhaus eines Lastkraftwagens bei einer geringen Produktionsstückzahl aus wirtschaftlichen Gründen bspw. über ein Stahlrohrgerippe hergestellt werden, welches anschließend beplankt wird. Hierbei können die Werkzeuginvestitionen für die Fahrerhaustragstruktur des Fahrerhauses gering gehalten werden. Bei geringen Planungsstückzahlen kann beispielsweise eine Stahlrohr-Schweißkonstruktion zum Einsatz kommen, die die eigentliche Fahrerhaustragstruktur bildet. Durch die direkte Integration des Unterfahrschutzes in den Gitterrahmen (z. B Gitterrohrrahmen) der Fahrerhaustragstruktur ist eine aufwendige, separate Montage des Unterfahrschutzes am Fahrzeug, insbesondere am Fahrzeugrahmen, nicht länger erforderlich. Ferner kann so auch die Verwendung des Gitterrahmens als Fahrerhaustragstruktur sowie zweckmäßig eine bodennahe Anordnung des Fahrerhauses vorteilhaft ausgenutzt werden.

Zweckmäßig kann der Gitterrahmen bspw. mit Blechen und/oder mit Kunststoffbauteilen beplankt sein.

In einem Ausführungsbeispiel weist der frontseitige Unterfahrschutz eine Höhe von mindestens 120 mm und/oder einen Bodenabstand von höchstens 40 cm auf.

In einem weiteren Ausführungsbeispiel erstreckt sich der frontseitige Unterfahrschutz entlang einer gesamten Breite des Fahrerhauses.

In einer Ausführungsform bildet der frontseitige Unterfahrschutz eine frontseitige Unterkante des Gitterrahmens.

In einer weiteren Ausführungsform weist der frontseitige Unterfahrschutz mehrere übereinanderliegende Profile auf.

In einer Ausführungsvariante ist der frontseitige Unterfahrschutz an dessen entgegengesetzten Enden gekrümmt ausgebildet, wobei der frontseitige Unterfahrschutz vorzugsweise zu den Enden hin entgegen einer Vorwärtsfahrtrichtung des Nutzfahrzeugs gekrümmt ist.

In einer weiteren Ausführungsvariante ist der frontseitige Unterfahrschutz nach ECE-R93 ausgeführt.

In einem Ausführungsbeispiel weist das Fahrerhaus ferner eine Seitencrashstruktur auf, vorzugsweise an beiden Längsaußenseiten des Fahrerhauses. Die Seitencrashstruktur ist vorzugsweise als eine Längsträgerkonstruktion des Gitterrahmens in die Fahrerhaustragstruktur integriert. Vorzugsweise kann die Seitencrashstrukturen auf einer Höhe mit dem frontseitigen Unterfahrschutz angeordnet und/oder als eine Verlängerung des frontseitigen Unterfahrschutz entlang der Längsaußenseite ausgebildet sein. Die Seitencrashstrukturen ermöglichen, dass die Funktion des frontseitigen Unterfahrschutzes auch für seitlich auftreffende Fahrzeuge entsprechend umgesetzt wird.

In einem weiteren Ausführungsbeispiel weist das Fahrerhaus mehrere Verschraubungspunkte zur starren Anbindung der Fahrerhaustragstruktur an einen Fahrzeugrahmen des Nutzfahrzeugs auf, wobei die mehreren Verschraubungspunkte in (zum Beispiel länglichen) Trägern des Gitterrahmens in die Fahrerhaustragstruktur integriert sind. Damit kann die Funktionsintegration durch den Gitterrahmen weiter erhöht werden.

In einer Ausführungsform weist das Fahrerhaus ferner einen Durchtritt auf, der in einer Fahrerhausrückwandstruktur der Fahrerhaustragstruktur zum rückseitigen Verlassen des Fahrerhauses integriert ist. Der Durchtritt kann beispielsweise dazu verwendet werden, aus dem Fahrerhaus direkt in einen Aufbau des Nutzfahrzeugs zu gehen. Dies kann bei einigen Aufbautypen sinnvoll sein, zum Beispiel bei einem städtischen Verteiler-Lastkraftwagen. Damit kann außerdem die Funktionsintegration durch den Gitterrahmen weiter erhöht werden, wobei die Fahrerhaustragstruktur eben durch den Aufbau als Gitterrahmen nicht geschwächt wird.

In einer Weiterbildung weist eine Fahrerhausdachstruktur der Fahrerhaustragstruktur eine Aussparung auf, die einen oberen Bereich des Durchtritts bildet. Zweckmäßig kann der Durchtritt somit in aufrechter oder annähernd aufrechter Haltung durchschritten werden.

In einer weiteren Ausführungsform ist der Durchtritt bezüglich einer Fußbodenebene der Fahrerhaustragstruktur erhöht, vorzugsweise in einem Bereich zwischen 30 cm und 80 cm; und/oder der Durchtritt ist über eine Treppe im Fahrerhaus erreichbar. Damit kann auf einfache Weise ein höher angeordneter Aufbau, der auf dem Fahrzeugrahmen aufsitzt, aus einem bodennahen Fahrerhaus erreicht werden.

In einer Ausführungsvariante weist das Fahrerhaus ferner einen Luftführungskanal auf, der sich zwischen einer Öffnung an einer Vorderseite einer Fahrerhausvorderwandstruktur der Fahrerhaustragstruktur und einer Öffnung an einer Unterseite einer Fahrerhausbodenstruktur der Fahrerhaustragstruktur erstreckt, vorzugsweise in einer Richtung schräg nach unten. Der Luftführungskanal ermöglicht, dass beispielsweise auch bei einem bodennahen Fahrerhaus Kühlluft für einen Wärmetauscher zur Verfügung steht, ohne dass der Luftführungskanal einen Innenraum des Fahrerhauses wesentlich beschränkt.

In einer weiteren Ausführungsvariante weist eine Beplankung (zum Beispiel ein Blech) einer Fahrerhausrückwandstruktur der Fahrerhaustragstruktur eine Durchgangsöffnung auf, die einen zusätzlichen rückseitigen Verschieberaum für einen (z. B. verschiebbaren) Fahrersitz des Fahrerhauses schafft.

Erfindungsgemäss weist das Fahrerhaus ferner mindestens eine Abschleppvorrichtung auf, die vorzugsweise als ein Gewindeloch für eine Abschleppöse ausgebildet ist, wobei die mindestens eine Abschleppvorrichtung in den Gitterrahmen der Fahrerhaustragstruktur und/oder den frontseitigen Unterfahrschutz integriert ist. Damit kann die Funktionsintegration durch den Gitterrahmen weiter erhöht werden.

In einem weiteren Ausführungsbeispiel ist der Gitterrahmen aus mehreren länglichen (z. B. metallischen) Tragelementen vorzugsweise umfassend Stabelemente, Rohrelemente und/oder Längsprofilelemente, die in Knotenpunkten miteinander verbundenen (z. B. verklebt, verschweißt, verschraubt oder anderweitig gefügt) sind, gebildet. Alternativ oder zusätzlich ist der Gitterrahmen als ein Metallprofilgerippe, vorzugsweise Stahlprofilgerippe, oder als ein Metallrohrgerippe, vorzugsweise Stahlrohrgerippe, ausgebildet.

In einer Ausführungsform ist die Fahrerhaustragstruktur zur rückseitigen starren Anbindung an einen Fahrzeugrahmen des Nutzfahrzeugs ausgebildet.

Beispielsweise können eine Fahrerhausrückwandstruktur und/oder einer Fahrerhausbodenstruktur rückseitig starr an einen Fahrzeugrahmen des Nutzfahrzeugs anbringbar sein.

In einer weiteren Ausführungsform ist eine Fahrerhausrückwandstruktur der Fahrerhaustragstruktur gestuft ausgeführt, zur rückseitigen starren Anbindung an einen Fahrzeugrahmen des Nutzfahrzeugs. Damit kann die Fahrerhaustragstruktur trotz lediglich rückseitiger Anbindung sowohl in Vertikalrichtung als auch in Horizontalrichtung abgestützt werden.

Zweckmäßig begrenzt das Fahrerhaus das Nutzfahrzeug nach unten. In anderen Worten, unterhalb des Fahrerhauses ist beispielsweise keine Brennkraftmaschine und/oder kein Fahrzeugrahmen angeordnet. Bevorzugt kann das Fahrerhaus somit als ein Fahrerhaus für ein Elektro-Nutzfahrzeug, ein Brennstoffzellen-Nutzfahrzeug oder ein Hybrid-Nutzfahrzeug ohne frontseitige Verbrennungskraftmaschine verwendet werden.

Die Erfindung betrifft auch ein Nutzfahrzeug (zum Beispiel Elektro-Nutzfahrzeug oder Hybrid-Nutzfahrzeug), vorzugsweise einen Lastkraftwagen. Das Nutzfahrzeug weist einen Fahrzeugrahmen, vorzugsweise einen Leiterrahmen, auf. Das Nutzfahrzeug weist ferner ein Fahrerhaus wie hierin offenbart auf, wobei das Fahrerhaus starr und/oder nicht-federnd gelagert an einer Rückseite der Fahrerhaustragstruktur an dem Fahrzeugrahmen abgestützt ist (zum Beispiel mittels einer oder mehrerer Befestigungskonsolen). Durch die starre und/oder nicht-federnde Lagerung an der Rückseite der Fahrerhaustragstruktur kann zweckmäßig eine bodennahe Anordnung des Fahrerhauses ermöglicht werden.

Zweckmäßig kann der Leiterrahmen zwei parallel beabstandete Hauptlängsträger und mehrere die Hauptlängsträger verbindende Querträger aufweisen.

In einer Weiterbildung weist das Nutzfahrzeug einen Aufbau auf, der auf dem Fahrzeugrahmen angebracht und mittels des Durchtritts begehbar ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht eines beispielhaften Nutzfahrzeugs gemäß der vorliegenden Offenbarung;
- Figur 2: eine perspektivische Ansicht eines hinteren Bereichs einer beispielhaften Fahrerhaustragvorrichtung gemäß der vorliegenden Offenbarung;
- Figur 3: eine perspektivische Ansicht eines vorderen Eckbereichs der beispielhaften Fahrerhaustragvorrichtung; und
- Figur 4: eine Seitenansicht eines vorderen, unteren Bereichs der beispielhaften Fahrerhaustragvorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

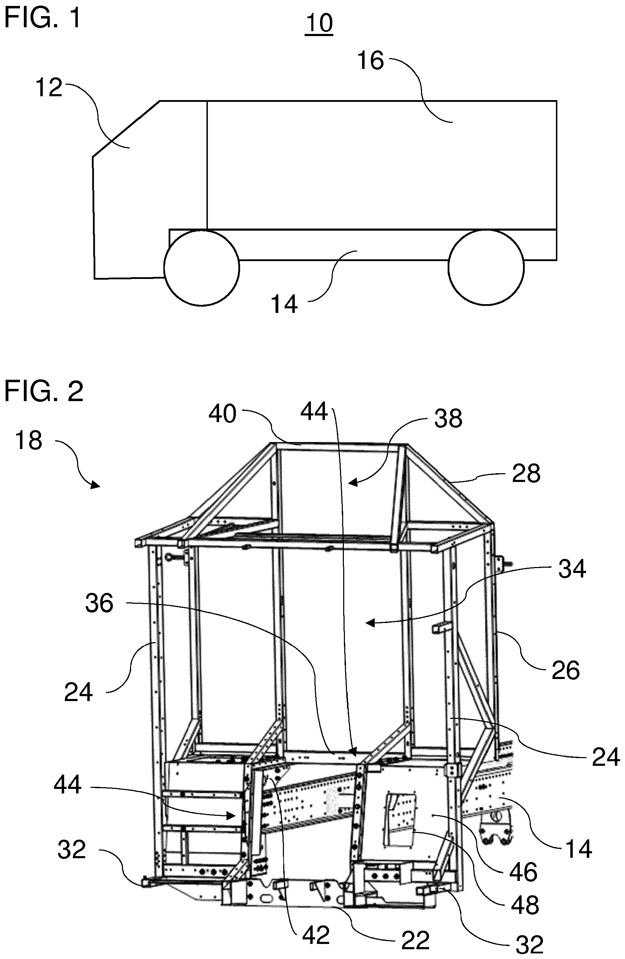

Die Figur 1 zeigt ein Nutzfahrzeug 10. Das Nutzfahrzeug 10 ist beispielhaft als ein Lastkraftwagen dargestellt. Das Nutzfahrzeug 10 kann beispielsweise als ein Elektro-Nutzfahrzeug, das einzig mittels elektrischer Energie angetrieben wird, oder als ein Hybrid-Nutzfahrzeug, das auch mit elektrischer Energie antreibbar ist, ausgebildet sein.

Das Nutzfahrzeug 10 weist ein Fahrerhaus 12 und einen Fahrzeugrahmen 14 auf. Das Nutzfahrzeug 10 kann ferner beispielsweise einen Aufbau 16 aufweisen. Eine Besonderheit des Nutzfahrzeugs 10 kann darin liegen, dass das Fahrerhaus 12 bodennah mit einem Bodenabstand von beispielsweise 40 cm oder weniger angeordnet ist. Ein geringer Bodenabstand kann einen Einstieg in das Fahrerhaus 12 und einen Ausstieg aus dem Fahrerhaus 12 komfortabler gestalten. Der geringe Bodenabstand kann durch eine starre Lagerung des Fahrerhauses 12 ermöglicht werden. Das Fahrerhaus 12 kann zweckmäßig an dessen Rückseite starr / nicht-federnd an dem Fahrzeugrahmen 14 abgestützt sein, zum Beispiel mittels dazwischen angeordneten Befestigungskonsolen. Der Fahrzeugrahmen 14 kann beispielsweise ein Leiterrahmen sein. Der Aufbau 16 kann auf dem Fahrzeugrahmen 14 abgestützt sein, zum Beispiel mittels eines Hilfsrahmens.

Nachfolgend ist unter Bezugnahme auf die Figuren 2 bis 4 das Fahrerhaus 12 näher beschrieben. Die Figuren 2 bis 4 zeigen einen Rohbau des Fahrerhauses 12.

Das Fahrerhaus 12 weist eine Fahrerhaustragstruktur 18 auf. Die Fahrerhaustragstruktur 18 ist eine tragende Struktur und bildet einen selbsttragenden Fahrerhausrohbau. Die Fahrerhaustragstruktur 18 weist eine Fahrerhausvorderwandstruktur 20, eine Fahrerhausbodenstruktur 22, Fahrerhausseitenwandstrukturen 24, eine Fahrerhausrückwandstruktur 26 und eine Fahrerhausdachstruktur 28 auf.

Die Fahrerhaustragstruktur 18 insgesamt und die einzelnen Strukturen 20-28 sind als Gitterrahmen konzipiert. Der Gitterrahmen weist eine Vielzahl von länglichen Trägerelementen auf, die in Knotenpunkten miteinander verbunden sind. Die Trägerelemente können beispielsweise, wie dargestellt ist, Vierkantrohre aufweisen. Es ist auch möglich, dass die länglichen Trägerelemente andere Stabelemente, Rohrelemente und/oder Profilelemente aufweisen. In den Knotenpunkten sind die länglichen Trägerelemente beispielsweise miteinander verschraubt, verschweißt, verklebt und/oder anderweitig miteinander gefügt. Der Gitterrahmen kann beispielsweise zusätzlich beplankt werden. In der dargestellten Ausführungsform ist der Gitterrahmen als ein Metallrohrgerippe bzw. ein Metallprofilgerippe aufgebaut. Als Metall kann beispielsweise Stahl oder auch Aluminium verwendet werden.

Zusätzlich zur Eigenschaft einer Festigkeitsstruktur und der Aufnahme von Beplankungskomponenten kann die Fahrerhaustragstruktur 18 noch weitere Funktionen aufweisen, die durch eine geeignete Ausführung integriert werden können.

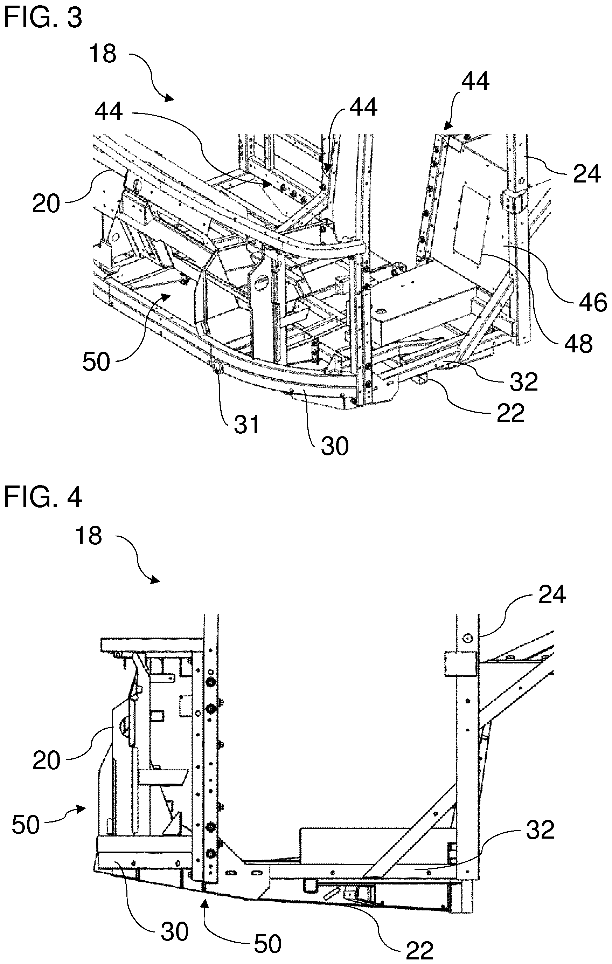

Die Fahrerhaustragstruktur 18 weist einen frontseitigen Unterfahrschutz 30 (siehe Figuren 3 und 4) auf. Der Unterfahrschutz 30 ist als eine Querträgerkonstruktion des Gitterrahmens der Fahrerhaustragstruktur 18 direkt in den Gitterrahmen integriert. In anderen Worten, der Unterfahrschutz 30 wird direkt über das Gerippe der Fahrerhaustragstruktur 18 dargestellt. Die geometrischen Anforderungen und die Festigkeitsanforderungen werden direkt an der Fahrerhaustragstruktur 18 umgesetzt. Der Unterfahrschutz 30 kann in Höhe der Fahrerhausbodenstruktur 22 angeordnet sein. Hierdurch kann die Fahrerhausbodenstruktur 22 verstärkend auf den Unterfahrschutz 30 einwirken. Zweckmäßig bildet der Unterfahrschutz 30 eine frontseitige Unterkante des Gitterrahmens.

Der Unterfahrschutz 30 kann eine Höhe von mindestens 120 mm und einen Bodenabstand von höchstens 40 cm aufweisen. Der Unterfahrschutz 30 erstreckt sich im Wesentlichen entlang einer gesamten Breite des Fahrerhauses 12. Es ist möglich, wie dargestellt ist, dass der Unterfahrschutz 30 mehrere, zum Beispiel zwei, übereinanderliegenden Profile, zum Beispiel Hohlprofile, aufweist. Wie dargestellt ist, kann der Unterfahrschutz 30 an dessen entgegengesetzten Enden gekrümmt ausgebildet sein. Zweckmäßig kann der Unterfahrschutz 30 nach ECE-R93 ausgeführt sein.

In den frontseitigen Unterfahrschutz 30 kann eine oder können mehrere Abschleppvorrichtungen 31 integriert sein. Die Abschleppvorrichtung 31 kann an einer Vorderseite der Fahrerhaustragstruktur 18 angeordnet sein. Die Abschleppvorrichtung 31 kann bspw. als ein Gewindeloch zum Einschrauben einer Abschleppöse ausgebildet sein. Durch die bodennahe Integration der Abschleppvorrichtung 31 kann ein Kraftfluss beim Abschleppen zweckmäßig direkt in die Fahrerhausbodenstruktur 22 eingeleitet werden, die die auftretenden Abschleppkräfte in den Fahrzeugrahmen 14 weiterleiten kann.

Die Fahrerhaustragstruktur 18 kann an beiden Außenseiten Seitencrashstrukturen 32 für den Insassenschutz aufweisen. Die Seitencrashstrukturen 32 sind jeweils als eine Längsträgerkonstruktion des Gitterrahmens der Fahrerhaustragstruktur 18 direkt in den Gitterrahmen integriert. Insbesondere sind die Seitencrashstrukturen 32 an entgegengesetzten Außenseiten der Fahrerhausbodenstruktur 22 angeordnet.

Zweckmäßig können die Seitencrashstrukturen 32 auf gleicher Höhe wie der frontseitige Unterfahrschutz 30 angeordnet sein. Die Seitencrashstrukturen 32 sind dazu ausgebildet, bei einem Seitenaufprall unter vorbestimmter plastischer Deformation eine Aufprallenergie abzubauen, wobei verhindert wird, dass das auf aufprallende Fahrzeug in die Fahrerhaustragstruktur 18 eindringt. Mittels der Seitencrashstrukturen 32 kann die Funktion des frontseitigen Unterfahrschutzes 30 auch für seitlich auftreffende Fahrzeuge entsprechend umgesetzt werden. In der Fahrerhausrückwandstruktur 26 kann ein Durchtritt oder Durchgang 34 in Form einer Aussparung im Gitterrahmen der Fahrerhausrückwandstruktur 26 angeordnet sein. Der Durchtritt 34 ist bezüglich einer Querachse der Fahrerhausrückwandstruktur 26 mittig in der Fahrerhausrückwandstruktur 26 angeordnet. Der Durchtritt 34 ermöglicht, dass der Aufbau 16 (siehe Figur 1) vom Fahrerhaus 12 aus begangen werden kann. Dies kann bei bestimmten Fahrzeugausführungen vorteilhaft sein. Durch die Integration des Durchtritts 34 in den Gitterrahmen kann eine Durchstiegsfunktion realisiert werden, ohne dass festigkeitseinschränkende Eingriffe bezüglich der Fahrerhaustragstruktur 18 notwendig sind.

Der Durchtritt 34 kann bezüglich eines Bodens der Fahrerhaustragstruktur 18 erhöht angeordnet sein, zum Beispiel in einem Bereich zwischen 30 cm und 80 cm. Zweckmäßig kann ein Unterkantenprofil 36 des Durchtritts 34 ungefähr auf Höhe einer Unterkante des Aufbaus 16 sein. Zum Erreichen des Durchtritts 34 kann im Fahrerhaus 12 eine Treppe (nicht dargestellt) angeordnet sein. Es ist möglich, dass die Fahrerhausdachstruktur 28 eine Aussparung 38 aufweist, die einen oberen Bereich des Durchtritts 34 bildet. Beispielsweise kann ein Oberkantenprofil 40 des Durchtritts 34 durch einen oberen oder obersten Querträger der Fahrerhausdachstruktur 28 gebildet sein. Somit kann ermöglicht werden, dass der Durchtritt 34 beispielsweise in aufrechter oder annähernd aufrechter Haltung durchschritten werden kann. Im Durchtritt 34 kann beispielsweise eine Tür o.ä. angeordnet sein.

Mittels der Fahrerhausrückwandstruktur 26 kann die Fahrerhaustragstruktur 18 an dem Fahrzeugrahmen 14 starr abgestützt sein. Der Fahrzeugrahmen 14 kann, wie beispielsweise in Figur 2 dargestellt ist, als ein Leiterrahmen mit zwei parallel beabstandeten Hauptlängsträgern ausgebildet sein. Die Hauptlängsträger des Fahrzeugrahmens 14 können die Fahrerhaustragstruktur 18 starr über eine oder mehrere Befestigungskonsolen 42 tragen. Durch eine stufige Ausführung der Fahrerhausrückwandstruktur 26 kann die Fahrerhausrückwandstruktur 26 sowohl in einer Vertikalrichtung als auch in einer Horizontalrichtung an der oder den Befestigungskonsolen 42 starr abgestützt sein. Die Befestigungskonsolen 42 können wiederum starr an dem Fahrzeugrahmen 14 befestigt sein.

Es ist möglich, dass die Fahrerhausrückwandstruktur 26 und/oder die Fahrerhausbodenstruktur 22 lösbar an der Befestigungskonsole 42 anbringbar sind, zum Beispiel mittels Schrauben. Mehrere Verschraubungspunkte 44, zum Beispiel Schraubenlöcher, der Fahrerhausrückwandstruktur 26 und/oder der Fahrerhausbodenstruktur 22 können direkt in den (länglichen) Trägerelementen des Gitterrahmens integriert sein.

Wie ferner in Figur 2 dargestellt ist, kann eine Beplankung 46, z. B. ein Blech, der Fahrerhausrückwandstruktur 26 auf der Fahrerseite eine, vorzugsweise rechteckförmige, Durchgangsöffnung 48 aufweisen. Die Durchgangsöffnung 48 kann einen Verschiebeweg eines verschiebbaren Fahrersitzes (nicht dargestellt) im Fahrerhaus 12 nach hinten durch Bereitstellen eines zusätzlichen rückseitigen Verschieberaums verlängern. Beispielsweise kann eine am Fahrersitz befestigte Gurtrolle in die Durchgangsöffnung 48 eintauchen, wenn der Fahrersitz bis zum Endanschlag nach hinten verschoben wird.

Die Fahrerhaustragstruktur 18 kann einen Luftführungskanal 50 für Kühlluft aufweisen. Der Luftführungskanal 50 erstreckt sich zwischen einer Öffnung an einer Vorderseite der Fahrerhausvorderwandstruktur 20 schräg nach unten zu einer Öffnung in einer Unterseite der Fahrerhausbodenstruktur 22. Der Luftführungskanal 50 kann zweckmäßig bezüglich einer Querachse der Fahrerhaustragstruktur 18 (d .h. Querachse des Nutzfahrzeugs 10) mittig in der Fahrerhaustragstruktur 18 angeordnet sein. Im Bereich der Öffnung an der Vorderseite entsteht während der Fahrt des Nutzfahrzeugs 10 ein Staudruckgebiet. Im Bereich der Öffnung an der Unterseite kann während der Fahrt des Nutzfahrzeugs 10 ein Unterdruck entstehen.

Im Luftführungskanal 50 können beispielsweise ein Gebläse und ein Wärmetauscher (nicht dargestellt) angeordnet sein. Das Gebläse kann beispielsweise aktiviert werden, wenn das Nutzfahrzeug 10 steht oder nicht genügend Kühlluft durch den Luftführungskanal 50 strömt. Der Wärmetauscher kann insbesondere ein Klimaanlagen-Kondensator einer Klimaanlage des Nutzfahrzeugs 10 sein. Aus Bauraumgründen kann es günstig sein, den Wärmetauscher in einer horizontalen Ausrichtung oder einer Ausrichtung, die bis zu maximal 45° geneigt zu einer Horizontalachse ist, in dem Luftführungskanal 50 einzubauen. Der Wärmetauscher kann insbesondere in oder benachbart zu der Öffnung an der Unterseite der Fahrerhausbodenstruktur 22 angeordnet sein, zweckmäßig im in Wesentlichen horizontaler Ausrichtung.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Fahrerhaustragstruktur und/oder des Unterfahrschutzes des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweilige bevorzugte engere Außengrenzen des jeweiligen Bereichs.

### Bezugszeichenliste

- 10: Nutzfahrzeug
- 12: Fahrerhaus
- 14: Fahrzeugrahmen
- 16: Aufbau
- 18: Fahrerhaustragstruktur
- 20: Fahrerhausvorderwandstruktur
- 22: Fahrerhausbodenstruktur
- 24: Fahrerhausseitenwandstruktur
- 26: Fahrerhausrückwandstruktur
- 28: Fahrerhausdachstruktur
- 30: Unterfahrschutz
- 31: Abschleppvorrichtung
- 32: Seitencrashstruktur
- 34: Durchtritt
- 36: Unterkantenprofil
- 38: Aussparung
- 40: Oberkantenprofil
- 42: Befestigungskonsole
- 44: Verschraubungspunkte
- 46: Beplankung
- 48: Durchgangsöffnung
- 50: Luftführungskanal

## Patentansprüche

1. Fahrerhaus (12) für ein Nutzfahrzeug (10), vorzugsweise einen Lastkraftwagen, aufweisend:
eine Fahrerhaustragstruktur (18), die einen Fahrerhausrohbau bildet und als ein Gitterrahmen ausgeführt ist; und
einen frontseitigen Unterfahrschutz (30), der als eine Querträgerkonstruktion des Gitterrahmens in die Fahrerhaustragstruktur (18) integriert ist,
**gekennzeichnet durch**
mindestens eine Abschleppvorrichtung (31), die als ein Gewindeloch für eine Abschleppöse ausgebildet ist, wobei die mindestens eine Abschleppvorrichtung (31) in den frontseitigen Unterfahrschutz (30) integriert ist.

2. Fahrerhaus (12) nach Anspruch 1, wobei:
der frontseitige Unterfahrschutz (30) eine Höhe von mindestens 120 mm aufweist; und/oder
der frontseitige Unterfahrschutz (30) einen Bodenabstand von höchstens 40 cm aufweist; und/oder
der frontseitige Unterfahrschutz (30) sich entlang einer gesamten Breite des Fahrerhauses (12) erstreckt.

3. Fahrerhaus (12) nach einem der vorherigen Ansprüche, wobei:
der frontseitige Unterfahrschutz (30) eine frontseitige Unterkante des Gitterrahmens bildet; und/oder
der frontseitige Unterfahrschutz (30) mehrere übereinanderliegende Profile aufweist; und/oder
der frontseitige Unterfahrschutz (30) an dessen entgegengesetzten Enden gekrümmt ausgebildet ist, wobei der frontseitige Unterfahrschutz (30) vorzugsweise zu den Enden hin entgegen einer Vorwärtsfahrtrichtung des Nutzfahrzeugs (10) gekrümmt ist.

4. Fahrerhaus (12) nach einem der vorherigen Ansprüche, wobei:
der frontseitige Unterfahrschutz (30) nach ECE-R93 ausgeführt ist.

5. Fahrerhaus (12) nach einem der vorherigen Ansprüche, ferner aufweisend:
eine Seitencrashstruktur (32), vorzugsweise an beiden Längsaußenseiten des Fahrerhauses (12), die als eine Längsträgerkonstruktion des Gitterrahmens in die Fahrerhaustragstruktur (18) integriert ist und vorzugsweise auf einer Höhe mit dem frontseitigen Unterfahrschutz (30) angeordnet und/oder als eine Verlängerung des frontseitigen Unterfahrschutzes (30) entlang der Längsaußenseite ausgebildet ist.

6. Fahrerhaus (12) nach einem der vorherigen Ansprüche, ferner aufweisend:
mehrere Verschraubungspunkte (44) zur starren Anbindung der Fahrerhaustragstruktur (18) an einen Fahrzeugrahmen (14) des Nutzfahrzeugs (10), wobei die mehreren Verschraubungspunkte (44) in Trägern des Gitterrahmens in die Fahrerhaustragstruktur (18) integriert sind.

7. Fahrerhaus (12) nach einem der vorherigen Ansprüche, ferner aufweisend:
einen Durchtritt (34), der in einer Fahrerhausrückwandstruktur (26) der Fahrerhaustragstruktur (18) zum rückseitigen Verlassen des Fahrerhauses (12) integriert ist.

8. Fahrerhaus (12) nach Anspruch 7, wobei:
eine Fahrerhausdachstruktur (28) der Fahrerhaustragstruktur (18) eine Aussparung (38) aufweist, die einen oberen Bereich des Durchtritts (34) bildet; und/oder
der Durchtritt (34) bezüglich einer Fußbodenebene der Fahrerhaustragstruktur (18) erhöht ist, vorzugsweise in einem Bereich zwischen 30 cm und 80 cm; und/oder
der Durchtritt (34) über eine Treppe im Fahrerhaus (12) erreichbar ist.

9. Fahrerhaus (12) nach einem der vorherigen Ansprüche, ferner aufweisend:
einen Luftführungskanal (50), der sich zwischen einer Öffnung an einer Vorderseite einer Fahrerhausvorderwandstruktur (20) der Fahrerhaustragstruktur (18) und einer Öffnung an einer Unterseite einer Fahrerhausbodenstruktur (22) der Fahrerhaustragstruktur (18) erstreckt, vorzugsweise in einer Richtung schräg nach unten.

10. Fahrerhaus (12) nach einem der vorherigen Ansprüche, wobei:
eine Beplankung (46) einer Fahrerhausrückwandstruktur (26) der Fahrerhaustragstruktur (18) eine Durchgangsöffnung (48) aufweist, die einen zusätzlichen rückseitigen Verschieberaum für einen Fahrersitz des Fahrerhauses (12) schafft.

11. Fahrerhaus (12) nach einem der vorherigen Ansprüche, wobei:
die mindestens eine Abschleppvorrichtung (31)in den Gitterrahmen integriert ist.

12. Fahrerhaus (12) nach einem der vorherigen Ansprüche, wobei:
der Gitterrahmen gebildet ist aus mehreren länglichen Tragelementen umfassend Stabelemente, Rohrelemente und/oder Längsprofilelemente, die in Knotenpunkten miteinander verbundenen sind; und/oder
der Gitterrahmen als ein Metallprofilgerippe, vorzugsweise Stahlprofilgerippe, oder als ein Metallrohrgerippe, vorzugsweise Stahlrohrgerippe, ausgebildet ist.

13. Fahrerhaus (12) nach einem der vorherigen Ansprüche, wobei:
die Fahrerhaustragstruktur (18) zur rückseitigen starren Anbindung an einen Fahrzeugrahmen (14) des Nutzfahrzeugs (10) ausgebildet ist; und/oder
eine Fahrerhausrückwandstruktur (26) der Fahrerhaustragstruktur (18) gestuft ausgeführt ist, zur rückseitigen starren Anbindung an einen Fahrzeugrahmen (14) des Nutzfahrzeugs (10).

14. Nutzfahrzeug (10), vorzugsweise Lastkraftwagen, aufweisend:
einen Fahrzeugrahmen (14), vorzugsweise einen Leiterrahmen; und
ein Fahrerhaus (12) nach einem der vorherigen Ansprüche, wobei das Fahrerhaus (12) starr und/oder nicht-federnd gelagert an einer Rückseite der Fahrerhaustragstruktur (18) an dem Fahrzeugrahmen (14) abgestützt ist.

15. Nutzfahrzeug (10) nach Anspruch 14 und Anspruch 7 oder einem der Ansprüche 6 bis 14, wenn abhängig vom Anspruch 7, ferner aufweisend:
einen Aufbau (16), der auf dem Fahrzeugrahmen (14) angebracht und mittels des Durchtritts (34) begehbar ist.

## Claims

1. A driver's cab (12) for a utility vehicle (10), preferably a lorry, having:
a driver's cab load-bearing structure (18) which forms a driver's cab shell and is configured as a space frame; and
a front-side underride guard (30) which is integrated as a crossmember construction of the space frame into the driver's cab load-bearing structure (18), **characterized by**
at least one towing apparatus (31) which is configured as a threaded hole for a towing eye, the at least one towing apparatus (31) being integrated into the front-side underride guard (30).

2. The driver's cab (12) according to Claim 1:
the front-side underride guard (30) having a height of at least 120 mm; and/or
the front-side underride guard (30) having a ground clearance of at most 40 cm; and/or
the front-side underride guard (30) extending along an entire width of the driver's cab (12).

3. The driver's cab (12) according to either of the preceding claims:
the front-side underride guard (30) forming a front-side lower edge of the space frame; and/or
the front-side underride guard (30) having a plurality of profiles which lie above one another; and/or
the front-side underride guard (30) being of curved configuration at its opposite ends, the front-side underride guard (30) preferably being curved towards the ends counter to a forward travelling direction of the utility vehicle (10).

4. The driver's cab (12) according to one of the preceding claims:
the front-side underride guard (30) being configured in accordance with ECE-R93.

5. The driver's cab (12) according to one of the preceding claims, having, furthermore:
a side impact structure (32), preferably on the two longitudinal outer sides of the driver's cab (12), which side impact structure (32) is integrated as a longitudinal beam construction of the space frame into the driver's cab load-bearing structure (18) and is preferably arranged at the same height as the front-side underride guard (30) and/or is configured as an extension of the front-side underride guard (30) along the longitudinal outer side.

6. The driver's cab (12) according to one of the preceding claims, having, furthermore:
a plurality of bolt attachment points (44) for the rigid attachment of the driver's cab load-bearing structure (18) to a vehicle frame (14) of the utility vehicle (10), the plurality of bolt attachment points (44) in carriers of the space frame being integrated into the driver's cab load-bearing structure (18).

7. The driver's cab (12) according to one of the preceding claims, having, furthermore:
a passage (34) which is integrated into a driver's cab rear wall structure (26) of the driver's cab load-bearing structure (18) for rear-side exiting of the driver's cab (12).

8. The driver's cab (12) according to Claim 7:
a driver's cab roof structure (28) of the driver's cab load-bearing structure (18) having a cut-out (38) which forms an upper region of the passage (34); and/or
the passage (34) being elevated with regard to a floor level of the driver's cab load-bearing structure (18), preferably in a range between 30 cm and 80 cm; and/or
it being possible for the passage (34) to be reached via a step in the driver's cab (12).

9. The driver's cab (12) according to one of the preceding claims, having, furthermore:
an air guiding channel (50) which extends between an opening on a front side of a driver's cab front wall structure (20) of the driver's cab load-bearing structure (18) and an opening on an underside of a driver's cab floor structure (22) of the driver's cab load-bearing structure (18), preferably in a direction obliquely downwards.

10. The driver's cab (12) according to one of the preceding claims:
a panel (46) of a driver's cab rear wall structure (26) of the driver's cab load-bearing structure (18) having a through opening (48) which provides an additional rear-side displacement space for a driver's seat of the driver's cab (12).

11. The driver's cab (12) according to one of the preceding claims:
the at least one towing apparatus (31) being integrated into the space frame.

12. The driver's cab (12) according to one of the preceding claims:
the space frame being formed from a plurality of elongate load-bearing elements comprising rod elements, tubular elements and/or longitudinal profile elements which are connected to one another at nodal points; and/or
the space frame being formed as a metal profile framework, preferably a steel profile framework, or as a metal tube framework, preferably a steel tube framework.

13. The driver's cab (12) according to one of the preceding claims:
the driver's cab load-bearing structure (18) being configured for the rear-side rigid attachment to a vehicle frame (14) of the utility vehicle (10); and/or
a driver's cab rear wall structure (26) of the driver's cab load-bearing structure (18) being of stepped configuration, for the rear-side rigid attachment to a vehicle frame (14) of the utility vehicle (10).

14. A utility vehicle (10), preferably a lorry, having:
a vehicle frame (14), preferably a ladder frame; and
a driver's cab (12) according to one of the preceding claims, the driver's cab (12) being supported on a rear side of the driver's cab load-bearing structure (18) on the vehicle frame (14) in a rigid and/or non-sprung manner.

15. The utility vehicle (10) according to Claim 14 and Claim 7 or according to one of Claims 6 to 14 if dependent on Claim 7, having, furthermore:
a body (16) which is attached on the vehicle frame (14) and is accessible by means of the passage (34).

## Revendications

1. Cabine de conducteur (12) pour un véhicule utilitaire (10), de préférence un poids lourd, présentant :
une structure porteuse de cabine (18) qui constitue une caisse brute de cabine et est réalisée sous la forme d'un cadre tubulaire ; et
un dispositif anti-encastrement frontal (30) qui est intégré dans la structure porteuse de cabine (18) sous la forme d'une construction de traverse du cadre tubulaire,
**caractérisée par** au moins un dispositif de remorquage (31) qui est réalisé sous la forme d'un trou taraudé destiné à un anneau de remorquage, ledit au moins un dispositif de remorquage (31) étant intégré dans le dispositif anti-encastrement frontal (30).

2. Cabine de conducteur (12) selon la revendication 1, dans laquelle :
le dispositif anti-encastrement frontal (30) présente une hauteur d'au moins 120 mm ; et/ou
le dispositif anti-encastrement frontal (30) présente une garde au sol d'un maximum de 40 cm ; et/ou
le dispositif anti-encastrement frontal (30) s'étend le long de toute la largeur de la cabine de conducteur (12).

3. Cabine de conducteur (12) selon l'une quelconque des revendications précédentes, dans laquelle :
le dispositif anti-encastrement frontal (30) forme un bord inférieur frontal du cadre tubulaire ; et/ou
le dispositif anti-encastrement frontal (30) présente plusieurs profilés superposés ; et/ou
le dispositif anti-encastrement frontal (30) est réalisé de façon courbe au niveau de ses extrémités opposées, le dispositif anti-encastrement frontal (30) étant de préférence courbé en direction des extrémités à l'opposé d'un sens de la marche avant du véhicule utilitaire (10).

4. Cabine de conducteur (12) selon l'une quelconque des revendications précédentes, dans laquelle :
le dispositif anti-encastrement frontal (30) est réalisé selon ECE-R93.

5. Cabine de conducteur (12) selon l'une quelconque des revendications précédentes, présentant en outre :
une structure antichoc latéral (32), de préférence sur les deux faces extérieures longitudinales de la cabine de conducteur (12) et qui est intégrée dans la structure porteuse de cabine (18) sous la forme d'une construction de longeron du cadre tubulaire, et est disposée de préférence au même niveau que le dispositif anti-encastrement frontal (30), et/ou est réalisée sous la forme d'une extension du dispositif anti-encastrement frontal (30) le long de la face extérieure longitudinale.

6. Cabine de conducteur (12) selon l'une quelconque des revendications précédentes, présentant en outre :
plusieurs points de vissage (44) servant au raccordement rigide de la structure porteuse de cabine (18) à un châssis de véhicule (14) du véhicule utilitaire (10), les plusieurs points de vissage (44) étant intégrés dans la structure porteuse de cabine (18) dans des poutres du cadre tubulaire.

7. Cabine de conducteur (12) selon l'une quelconque des revendications précédentes, présentant en outre :
un passage (34) qui est intégré dans une structure de paroi arrière de cabine (26) de la structure porteuse de cabine (18) permettant de quitter la cabine de conducteur (12) par la face arrière.

8. Cabine de conducteur (12) selon la revendication 7, dans laquelle :
une structure de toit de cabine (28) de la structure porteuse de cabine (18) présente un évidement (38) qui forme une zone supérieure du passage (34) ; et/ou
le passage (34) est relevé par rapport à un plan de plancher de la structure porteuse de cabine (18), de préférence dans une plage entre 30 cm et 80 cm ; et/ou
le passage (34) est accessible par un escalier dans la cabine de conducteur (12).

9. Cabine de conducteur (12) selon l'une quelconque des revendications précédentes, présentant en outre :
un canal de guidage d'air (50) qui s'étend entre une ouverture sur une face avant d'une structure de paroi avant de cabine (20) de la structure porteuse de cabine (18) et une ouverture sur une face inférieure d'une structure de plancher de cabine (22) de la structure porteuse de cabine (18), de préférence dans une direction en biais vers le bas.

10. Cabine de conducteur (12) selon l'une quelconque des revendications précédentes, dans laquelle :
un revêtement (46) d'une structure de paroi arrière de cabine (26) de la structure porteuse de cabine (18) présente une ouverture traversante (48) qui crée un espace de recul supplémentaire pour un siège de conducteur de la cabine de conducteur (12).

11. Cabine de conducteur (12) selon l'une quelconque des revendications précédentes, dans laquelle :
ledit au moins un dispositif de remorquage (31) est intégré dans le cadre tubulaire.

12. Cabine de conducteur (12) selon l'une quelconque des revendications précédentes, dans laquelle :
le cadre tubulaire est formé à partir de plusieurs éléments porteurs allongés comprenant des éléments en forme de barres, des éléments tubulaires et/ou des éléments en profilés longitudinaux qui sont reliés ensemble au niveau de points de jonction ; et/ou
le cadre tubulaire est réalisé sous la forme d'une ossature en profilés métalliques, de préférence d'une ossature en profilés d'acier, ou sous la forme d'une ossature en tubes métalliques, de préférence d'une ossature en tubes d'acier.

13. Cabine de conducteur (12) selon l'une quelconque des revendications précédentes, dans laquelle :
la structure porteuse de cabine (18) est réalisée pour un raccordement rigide côté arrière à un châssis de véhicule (14) du véhicule utilitaire (10) ; et/ou
une structure de paroi arrière de cabine (26) de la structure porteuse de cabine (18) est réalisée de manière étagée pour le raccordement rigide côté arrière à un châssis de véhicule (14) du véhicule utilitaire (10).

14. Véhicule utilitaire (10), de préférence poids lourd, présentant :
un châssis de véhicule (14), de préférence un châssis en échelle ; et
une cabine de conducteur (12) selon l'une quelconque des revendications précédentes, la cabine de conducteur (12) prenant appui sur le châssis de véhicule (14), sur une face arrière de la structure porteuse de cabine (18), en étant montée de manière rigide et/ou non élastique.

15. Véhicule utilitaire (10) selon la revendication 14 et la revendication 7 ou selon l'une des revendications 6 à 14, lorsqu'elles dépendent de la revendication 7, présentant en outre :
une superstructure (16) qui est raccordée au châssis de véhicule (14) et est praticable au moyen du passage (34) .
